## Europäisches Patentamt
## European Patent Office
## Office européen des brevets

(19)

(11) Numéro de publication: **0 044 244**
**B1**

(12) **FASCICULE DE BREVET EUROPEEN**

(45) Date de publication du fascicule du brevet: **19.09.84**

(51) Int. Cl.³: **H 02 P 1/42**

(21) Numéro de dépôt: **81401074.0**

(22) Date de dépôt: **03.07.81**

(54) **Moteur asynchrone monophasé.**

(30) Priorité: **11.07.80 FR 8015492**

(43) Date de publication de la demande:
**20.01.82 Bulletin 82/03**

(45) Mention de la délivrance du brevet:
**19.09.84 Bulletin 84/38**

(84) Etats contractants désignés:
**AT BE CH DE GB IT LI LU NL SE**

(56) Documents cités:
**FR-A-1 565 018**
**FR-A-1 587 425**
**FR-A-2 042 259**

(73) Titulaire: **SOCIETE ELECTRO-HYDRAULIQUE
(S.E.H.) Société anonyme
173 Boulevard Haussmann
Paris 8ème (FR)**

(72) Inventeur: **Busson, Gérard
THOMSON-CSF SCPI 173, bld Haussmann
F-75360 Paris Cedex 08 (FR)**

(74) Mandataire: **Grynwald, Albert et al
THOMSON-CSF SCPI 173, Bld Haussmann
F-75379 Paris Cedex 08 (FR)**

Courier Press, Leamington Spa, England.

EP 0 044 244 B1

## Description

L'invention est relative à un moteur électrique asynchrone monophasé selon le préambule de la revendication 1 (voir FR—A—2 042 259).

On sait que pour permettre la variation de la vitesse d'un moteur asynchrone monophasé, on peut disposer en série avec le bobinage principal un interrupteur commandé de façon à être conducteur pendant seulement une fraction de chaque période de durée T telle qu'une alternance du courant d'alimentation.

Avec un tel moyen de commande, la puissance d'alimentation est directement fonction de la vitesse désirée. Il en résulte que si ce moyen est branché en permanence et si le réglage est tel que la vitesse prévue pour le moteur est faible, le couple de démarrage peut se révéler insuffisant. Il en est ainsi, en particulier, lorsqu'un encrassage augemente le couple résistant qu'il est nécessaire de vaincre pour obtenir le démarrage; un tel couple résistant résulte, par exemple, de l'entartrage produit par la circulation de l'eau dans une pompe de circuit d'eau d'une installation de chauffage central.

L'invention vise à remédier à cet inconvénient.

Le moteur selon l'invention est caractérisé en ce qu'en parallèle sur l'interrupteur commandé est montée une résistance à coefficient de température positif (CTP) pour court-circuiter cet interrupteur au cours de la période de démarrage du moteur et pour constituer un circuit ouvert en régime permanent. De cette manière, le moteur est, au démarrage, alimenté à pleine puissance. A température ambiante, la valeur de la résistance CTP est négligeable et elle court-circuite l'interrupteur commandé. Le passage du courant provoque l'échauffement de cette résistance CTP et donc l'augmentation de sa valeur; celle-ci, à partir d'une température donnée (le point de Curie d'une substance ferroélectrique), croît brusquement et atteint une valeur importante, de l'ordre de $10^4$ ohms; l'interrupteur commandé n'est alors plus court-circuité; un courant de quelques milliampères circule cependant dans cette résistance qui est d'une valeur suffisante pour la maintenir à température élevée et donc à sa valeur élevée.

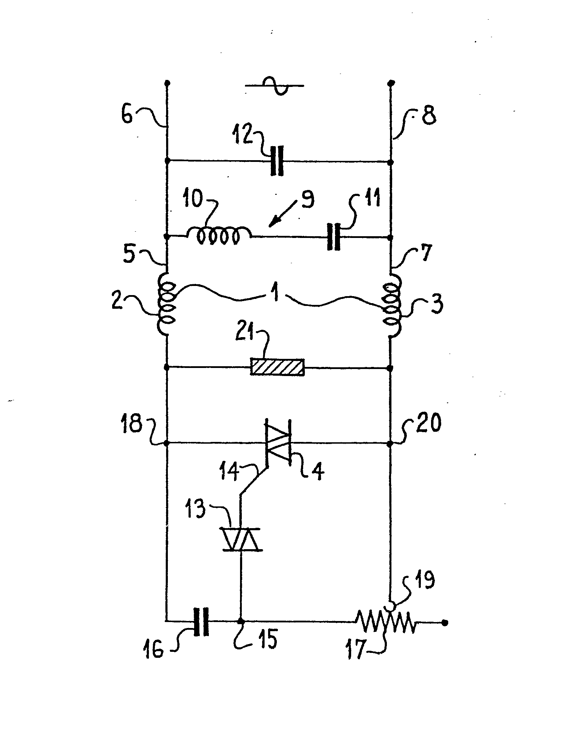

On décrit ci-après un mode de réalisation de l'invention en liaison avec la figure unique qui représente, de façon schématique, le circuit électrique d'un moteur selon l'invention.

Dans l'exemple, le bobinage (ou phase) principal 1 du moteur asynchrone monophasé comprend deux parties identiques 2 et 3 en série par l'intermédiaire d'un triac 4.

La borne 5 du demi bobinage 2 qui est opposée à celle qui est connectée au triac 4 est reliée à une ligne 6 d'un réseau, ou secteur, d'alimentation en courant alternatif. De même la borne 7 du demi bobinage 3 opposée à celle qui est connectée au triac est reliée à l'autre ligne 8 du réseau.

En parallèle sur le bobinage principal 1 est monté un ensemble 9 constitué d'un bobinage (ou phase) auxiliaire 10 et d'un condensateur 11 disposés en série qui sont destinés à permettre le démarrage du moteur asynchrone monophasé. On sait en effet qu'un moteur asynchrone alimenté en courant alternatif monophasé ne peut démarrer seul, car, à vitesse nulle, les deux champs tournants engendrés par le passage du courant monophasé dans le bobinage principal 1 provoquent des couples opposés, le champ tournant résultant ayant alors une amplitude nulle; le bobinage 10 en série avec le condensateur 11 permet de conférer une valeur non nulle à l'amplitude du champ tournant résultant lors du démarrage.

Le bobinage 10 et le condensateur 11 restent branchés en permanence.

Egalement en parallèle sur le bobinage 1 est installé un condensateur 12 d'antiparasitage. Il est à noter ici que le fait de disposer le triac 4 entre les demi bobinages 2 et 3, et qu'ainsi ce triac est relié aux lignes 6 et 8 du secteur 9 par l'intermédiaire desdits demi bobinages, contribue également à empêcher la transmission au réseau à lignes 6 et 8 des signaux à hautes fréquences engendrés par le fonctionnement du triac.

Le circuit de commande du triac 4 comporte un diac 13 dont une borne est reliée à la gachette 14 du triac 4 et dont l'autre borne est reliée au point commun 15 à un condensateur 16 et à un potentiomètre 17. L'autre armature du condensateur 16 est reliée au point commun 18 au triac 4 et au demi bobinage 2. Le curseur ou prise 19 du potentiomètre 17 est relié au point commun 20 au triac 4 et au demi bobinage 3.

Une résistance 21 à coefficient de température positif (CTP) est montée en parallèle sur le triac 4.

Le fonctionnement est le suivant: quand le moteur asynchrone monophasé est mis sous tension, la résistance CTP 21 a une value négligeable et court-circuite ainsi le triac 4. Le bobinage 1 peut ainsi être alimenté à pleine puissance et le démarrage s'effectue dans de bonnes conditions. Le passage du courant dans cette résistance CTP 21 provoque son échauffement et donc une augmentation de sa valeur. Après quelques dizaines de secondes, celle-ci croît brusquement et atteint une valeur de l'ordre de $10^4$ ohms et ne constitue plus ainsi un court-circuit pour le triac 4. Cette résistance 21 se maintient en circuit ouvert au cours du fonctionnement permanent du moteur car sa température est entretenue par la chaleur apportée par le courant qui la traverse.

Le triac 4 n'est conducteur que pendant une fraction de chaque alternance du courant fourni par le réseau. Cette fraction est fonction de la capacité du condensateur 16 et de la résistance du potentiomètre 17.

Le moteur peut démarrer dans les meilleures conditions, indépendamment du réglage de la vitesse du moteur asynchrone.

Le moteur selon l'invention peut se prêter à de nombreuses applications: moteurs de pompes de circulation de l'eau dans le circuit d'une installation de chauffage central, moteurs de ventilateurs, etc.

## Revendications

1. Moteur asynchrone alimenté en courant alternatif monophasé comprenant, en série avec son bobinage principal (1), un interrupteur commandé (4) de façon à être conducteur pendant une fraction de chaque alternance du courant d'alimentation, caractérisé en ce qu'en parallèle sur l'interrupteur commandé (4) est montée une résistance (21) à coefficient de température positif (CTP) pour court-circuiter cet interrupteur au cours de la période de démarrage du moteur et pour constituer un circuit ouvert en régime permanent.

2. Moteur selon la revendication 1, caractérisé en ce que l'interrupteur commandé (4) est un triac.

3. Moteur selon la revendication 2, caractérisé en ce que le circuit de commande de l'interrupteur commandé comporte un diac (13).

4. Moteur selon l'une quelconque des revendications précédentes, caractérisé en ce que le bobinage principal (1) comprend deux parties (2 et 3) séparées par l'interrupteur commandé (4) de manière que ce dernier soit relié au réseau d'alimentation par l'intermédiaire des deux parties du bobinage formant filtre d'antiparasitage.

5. Moteur selon la revendication 4, caractérisé en ce qu'un condensateur (12) d'antiparasitage est en parallèle entre les bornes d'alimentation.

## Patentansprüche

1. Asynchronmotor, der mit einphasigem Wechselstrom gespeist wird und in Reihe mit seiner Hauptwicklung (1) einen Unterbrecher (4) enthält, der so gesteurt ist, daß er während eines Bruchteils jeder Halbwelle des Versorgungsstromes leitet, dadurch gekennzeichnet, daß parallel zu dem gesteuerten Unterbrecher (4) ein Widerstand (21) mit positivem Temperaturkoeffizient (PTC) geschaltet ist, um diesen Unterbrecher während der Anlaufperiode des Motors kurzzuschließen und im Dauerbetrieb einen offenen Kreis zu bilden.

2. Motor nach Anspruch 1, dadurch gekennzeichnet, daß der gesteuerte Unterbrecher (4) ein Triac ist.

3. Motor nach Anspruch 2, dadurch gekennzeichnet, daß der Steuerkreis des gesteuerten Unterbrechers einen Diac (13) enthält.

4. Motor nach einem der vorstehenden Ansprüche, dadurch gekennzeichnet, daß die Hauptwicklung (1) zwei Teile (2 und 3) umfaßt, die durch den gesteuerten Unterbrecher (4) getrennt sind, so daß letzterer mit dem Versorgungsnetz über die zwei Teile der Wicklung verbunden ist, die ein Entstörfilter bilden.

5. Motor nach Anspruch 4, dadurch gekennzeichnet, daß ein Entstörkondensator (12) parallel zwischen die Versorgungsanschlüsse geschaltet ist.

## Claims

1. Asynchronous motor supplied by an alternating monophase current comprising, in series with its main winding (1), an interrupter (4) controlled in a manner to be conductive during a fraction of each alternation of the supply current, characterized in that a resistor (21) having a positive temperature coefficient (PTC) is connected in parallel to said controlled interrupter (4) for short-circuiting said interrupter during the starting period of the motor and to form an open circuit in the permanent operation mode.

2. Motor according to claim 1, characterized in that the controlled interrupter (4) is a triac.

3. Motor according to claim 2, characterized in that the control circuit of the controlled interrupter comprises a diac (13).

4. Motor according to any of the preceding claims, characterized in that the main winding (1) comprises two portions (2 and 3) separated by the controlled interrupter (4) in such a manner that the latter is connected to the supply mains through the two portions of the winding forming an interference filter.

5. Motor according to claim 5, characterized in that an interference suppression capacitor (12) is connected in parallel between the supply terminals.